# EUROPÄISCHE PATENTSCHRIFT

(11) **EP 2 732 956 B1**
(45) Veröffentlichungstag und Bekanntmachung des Hinweises auf die Patenterteilung: **12.09.2018**
(21) Anmeldenummer: 13189849.6
(22) Anmeldetag: 23.10.2013
(51) Int. Cl.: B29C 65/06, B29C 37/04, B23C 5/10

(54) **Setzwerkzeugsystem**
Setting tool system
Système d'outil de pose

(30) Priorität: 16.11.2012 DE 202012011021 U
(43) Veröffentlichungstag der Anmeldung: 21.05.2014
(73) Patentinhaber: EJOT GmbH & Co. KG, 57319 Bad Berleburg (DE)
(72) Erfinder: Becker, Mirko, 57334 Bad Laasphe (DE); Kraußer, Ingo, 57334 Bad Laasphe (DE); Born, Herbert, 57319 Bad Berleburg (DE)
(74) Vertreter: Hohgardt, Martin

(56) Entgegenhaltungen:
- CH-A- 378 128
- JP-A- 2001 087 925
- JP-U- S6 294 026
- US-A- 1 515 548
- US-A- 4 477 307
- US-A- 4 787 956
- US-A- 5 536 344
- US-A- 6 153 035

## Beschreibung

Die Erfindung betrifft ein Setzwerkzeugsystem, insbesondere ein Setzwerkzeugsystem zum Setzen von Reibschweißdomen in Sandwichmaterialien.

Reibschweißdome sind Befestigungselemente zur Befestigung von Bauteilen in geschäumte Materialien oder Wabenmaterialien / Sandwichmaterialien, wie sie zum Beispiel in der Autoindustrie, im Bootsbau, im Karavanbau oder im Flugzeugbau verwendet werden. Dabei sind die Reibschweißdome zumeist aus einem Hartkunststoff hergestellt und werden mittels Druck und Reibung in das Material gesetzt, wie zum Beispiel in US 6,153,035 und JP S62 94026 U gezeigt. Durch den Druck und die Reibung wird Hitze erzeugt, so dass Teile des Materials, in das der Reibschweißdom gesetzt wird, aufgeschmolzen werden und sich mit dem Reibschweißdom verbinden können. Der Reibschweißdom bildet somit eine ideale Grundlage für die Befestigung von Teilen an geschäumten Materialien oder Wabenmaterialien / Sandwichmaterialien. Reibschweißdome werden vorzugsweise oberflächenbündig in das Material gesetzt.

Beim oberflächenbündigen Setzen der Reibschweißdome in die verschiedenen Materialien tritt aber das Problem auf, dass häufig aufgeschmolzenes Material an der Oberfläche zwischen Reibschweißdom und Rand des Materials austritt und einen Wulst um die Setzstelle des Reibschweißdoms bildet. Dieser Wulst muss nach dem Setzen des Reibschweißdoms in einem weiteren Arbeitsschritt entfernt werden, um eine einheitliche Oberflächenstruktur zu schaffen, damit ein Bauteil flächenbündig mit dem Reibschweißdom verbunden werden kann. Des Weiteren kann es je nach der Beschaffenheit der Deckschicht des Materials notwendig sein, diese Deckschicht erst zu entfernen, um anschließend den Reibschweißdom in das darunterliegende Material zu setzen. Hierzu sind aber zusätzliche Werkzeuge, wie zum Beispiel ein Stirnfräser notwendig. Außerdem sind zusätzliche Arbeitsschritte notwendig, zum einen, um die Werkzeuge zu wechseln und zum anderen, um die Werkzeuge richtig auszurichten.

Die Aufgabe der vorliegenden Erfindung ist es Hilfsmittel zum Setzen von zumindest einem Reibschweißdom in verschiedene Materialien bereitzustellen, wobei die Hilfsmittel erlauben, die oben beschriebenen Arbeitsschritte zu vereinfachen und ein Nachbearbeiten der Oberfläche des Materials, in das der Reibschweißdom gesetzt wird, sich erübrigt.

Diese Aufgabe wird durch die in den unabhängigen Ansprüchen beanspruchten Vorrichtungen gelöst, das Setzwerkzeug und ein Setzwerkzeugsystem, welches das Setzwerkzeug und einen Fräsaufsatz aufweist.

Das erfindungsgemäße Setzwerkzeug weist einen Antriebsstrang auf, der einen ersten Endbereich und einen zweiten Endbereich aufweist. Der erste Endbereich ist ausgestaltet, um eine Kraftkopplung mit einem Reibschweißdom oder einem Aufsatz herzustellen, und der zweite Endbereich ist ausgestaltet, um eine Kraftkopplung mit einem Antrieb herzustellen. Beispielsweise kann der zweite Endbereich sechseckige geformt sein - ähnlich zu einem Bit -, so dass das Setzwerkzeug in einen entsprechend geformten Bithalter am Antrieb einsetzbar ist. Der zweite Endbereich kann aber auch einen runden Querschnitt aufweisen, so dass er zur Aufnahme in einem bekannten Bohrfutter dienen kann. Es sind aber auch beliebig andere Verbindungen denkbar, mit denen eine lösbare oder nicht lösbare Kraftkopplung mit einem Antrieb hergestellt werden kann. Des Weiteren weist das erfindungsgemäße Setzwerkzeug ein Haltemittel auf, welches an dem ersten Endbereich des Antriebsstrangs angeordnet ist. Erfindungsgemäß ist das Haltemittel federnd an dem ersten Endbereich des Antriebsstrangs angeordnet. Außerdem ist erfindungsgemäß an dem Haltemittel zumindest ein Schneidmittel angeordnet, wobei das zumindest eine Schneidmittel im Wesentlichen senkrecht zur Drehachse des Antriebsstrangs ausgerichtet ist. Das zumindest eine oder die mehreren angebrachten Schneidmittel erlauben es, dass beim Setzen des Reibschweißdoms die entstehende Wulst am Rand des Reibschweißdoms, also am Übergang vom Material zum Reibschweißdom, abgeschabt wird. Mit Hilfe der federnden Lagerung des Haltemittels wird vorzugsweise erreicht, dass das zumindest eine Schneidmittel nicht auch die Oberfläche des Materials abschabt, sondern nur den hervorstehenden Wulst. Dabei kann die federnde Lagerung des Haltemittels beispielsweise durch eine Feder und einen Anschlag am Antriebsstrang realisiert sein. Es gibt verschiedene Möglichkeiten, wie mit Hilfe der federnden Lagerung das Abtragen beziehungsweise Abschaben der Wulst ermöglicht wird. Die Feder kann beispielsweise derart ausgelegt sein, dass sie beim ersten Kontakt des zumindest einen Schneidmittels mit der Wulst nicht nachgibt, aber beim Kontakt des zumindest einen Schneidmittels mit der Oberfläche des Materials, das Haltemittel zurückfedert, so dass verhindert wird, dass sich das zumindest eine Schneidmittel in das Material eingräbt. Des Weiteren kann das Haltemittel im Zusammenspiel mit der Feder auch als Tiefenanschlag dienen. Dazu kann beispielsweise der Federweg der Feder begrenzt sein und sobald diese vollständig oder bis über einen definierten Bereich eingefedert hat, wird die Drehung des Setzwerkzeuges gestoppt.

Das Setzwerkzeug erlaubt es somit die beim Setzen eines Reibschweißdoms entstehende Wulst am Übergang vom Reibschweißdom zum Material zu entfernen, ohne das hierzu ein weiterer Arbeitsschritt und/oder ein weiteres Werkzeug notwendig ist. Des Weiteren ist das erfindungsgemäße Setzwerkzeug einfach herzustellen und sehr wartungsfrei.

Bei manchen Materialien kann es aber notwendig sein, dass vor dem Setzen des Reibschweißdoms ein definierter Bereich der Deckschicht des Materials, in das der Reibschweißdom gesetzt werden soll, entfernt werden muss. Dieses Entfernen einer Deckschicht wird durch einen Fräsaufsatz ermöglicht.

Der Fräsaufsatz weist einen ersten Endbereich auf, der ausgestaltet ist, um eine lösbare Kraftkopplung mit einem Setzwerkzeug herzustellen und einen zweiten Endbereich, der zumindest ein Schneidmittel aufweist. Mit Hilfe des Fräsaufsatzes kann ein definierter Bereich einer Deckschicht eines Materials durch das Schneidmittel entfernt werden. Dies ist insbesondere hilfreich, wenn die Deckschicht des Materials eine Härte hat, aufgrund derer der Reibschweißdom nicht gesetzt werden kann, ohne dass zuvor der definierte Bereich der Deckschicht entfernt würde. Hierzu kann das Schneidmittel unterschiedlich ausgestaltet sein und an das zu entfernende Deckschichtmaterial angepasst sein. So kann beispielsweise das Schneidmittel eine oder mehrere gehärtete Schneidkanten aufweisen, die durchgängig oder unterbrochen sein können. Des Weiteren kann das zumindest eine Schneidmittel auch austauschbar sein, so dass mit dem gleichen Fräsaufsatz verschiedene Materialien von Deckschichten entfernt werden können.

Durch die Ausgestaltung des ersten Endbereichs derart, dass er eine lösbare Kraftkopplung mit einem Setzwerkzeug herstellen kann, sind neben dem Fräsaufsatz keine zusätzlichen Werkzeuge notwendig, um die Deckschicht zu entfernen. Somit wird durch den Fräsaufsatz zum ersten Mal eine besonders einfache und schnelle Möglichkeit zum Entfernen der Deckschicht bereitgestellt.

Werden das erfindungsgemäße Setzwerkzeug und der Fräsaufsatz verbunden, so bilden sie das erfindungsgemäße Setzwerkzeugsystem. Mit dessen Hilfe kann zunächst durch den Fräsaufsatz ein definierter Bereich einer Deckschicht eines Materials entfernt werden und anschließend kann ein Reibschweißdom gesetzt werden und gleichzeitig die beim Setzen entstehende Wulst entfernt werden. Das erfindungsgemäße Setzwerkzeugsystem verringert somit die Arbeitsschritte die benötigt werden, um einen Reibschweißdom in ein Material zu setzen. Auch das Entfernen einer Deckschicht vor dem Setzen des Reibschweißdoms ist nunmehr mit weniger Arbeitsschritten möglich, vor allem ist mit dem erfindungsgemäßen Setzwerkzeugsystem keine Neujustierung des Setzwerkzeugs nach Entfernung der Deckschicht notwendig.

Im Folgenden sind bevorzugte Ausführungsformen des erfindungsgemäßen Setzwerkzeugs und des Fräsaufsatzes des erfindungsgemäßen Setzwerkzeugsystems beschrieben. Dabei sind die beschriebenen Ausführungsformen als gleichwertig zu betrachten und nicht eine als mehr bevorzugt als die andere. Auch können je nachdem gewünschten zu erzielenden Vorteil, Merkmale von verschiedenen Ausführungsformen beliebig kombiniert werden.

In einer bevorzugten Ausführungsform ist das zumindest eine Schneidmittel des Setzwerkzeugs eine Wendeschneidplatte. Die Wendeschneidplatte dient dazu, die beim Setzen des Reibschweißdoms gebildete Wulst am Übergang vom Reibschweißdom zum Deckmaterial abzuschaben. Dazu kann die Wendeschneidplatte beispielsweise eine gehärtete durchgehende oder unterbrochene Schneidkante aufweisen. Die Position des zumindest einen Schneidmittels an dem Haltemittel kann variabel sein, so dass das Setzwerkzeug an verschiedene Größen von Reibschweißdomen angepasst werden kann. Dabei kann entweder die Position des zumindest einen Schneidmittels an dem Haltemittel variabel sein oder das zumindest eine Schneidmittel ist an einer fixen Stelle am Haltemittel angeordnet, aber die Größe oder Ausdehnung des Haltemittels selbst ist variabel beziehungsweise einstellbar, so dass indirekt die Position des zumindest einen Schneidmittels variabel beziehungsweise einstellbar ist. Auch die Anzahl der Schneidmittel ist variabel und kann entsprechend der Eigenschaften des sich beim Setzten des Reibschweißdoms bildenden Wulstes gewählt werden. Dazu kann das Haltemittel beispielsweise eine Mehrzahl von Halterungen für Schneidmittel aufweisen.

In einer weiteren bevorzugten Ausführungsform weist der erste Endbereich des Setzwerkzeugs zumindest ein vorstehendes Element auf, welches in einer Ausnehmung in den Reibschweißdom angeordnet werden kann, um eine lösbare Kraftkopplung herzustellen. Dabei wird die Anzahl und die Ausgestaltung des zumindest einen vorstehenden Elements vorzugsweise so gewählt, dass ein genügendes Drehmoment von dem Antriebsstrang des Setzwerkzeugs auf den Reibschweißdom übertragen werden kann, um diesen ins Material zu drücken und zu verschweißen. Gleichzeitig sollte die Ausgestaltung des zumindest einen vorstehenden Elements derart ausgelegt sein, dass der Reibschweißdom am ersten Endbereich des Setzwerkzeugs gehalten wird und sich nicht unbeabsichtigt lösen kann. Dazu kann das zumindest eine vorstehende Element beispielsweise derart ausgestaltet sein, dass es eine Klickverbindung mit dem Reibschweißdom eingehen kann. Beispielsweise kann das zumindest eine vorstehende Element aber auch trapezförmig ausgestaltet sein, mit dem sich verjüngenden Ende zum Antriebsstrang weisend, so dass der Reibschweißdom, der zumindest eine entsprechende Ausnehmung aufweisen kann, nur mit gewissen Kraftaufwand an dem zumindest einen vorstehenden Element befestigt werden kann. Derartige oder ähnliche Anordnungen verhindern, dass sich der Reibschweißdom unbeabsichtigt vom ersten Endbereich des Setzwerkzeugs löst. Das zumindest eine vorstehende Element kann aber auch genutzt werden, um entsprechende Kraftkopplungen mit Aufsätzen, wie zum Beispiel dem Fräsaufsatz herzustellen. Dabei kann das zumindest eine vorstehende Element in entsprechende Ausnehmung in einem Aufsatz greifen. Um eine große Anzahl von Reibschweißdomen und/oder Aufsätzen zu unterstützen, kann das zumindest eine vorstehende Element auch austauschbar sein oder der Abstand von mehreren vorstehenden Elementen zueinander kann variabel beziehungsweise einstellbar sein. Beispielsweise kann / können vorstehende Elemente am ersten Endbereich des Setzwerkzeugs auf Rastbahnen angeordnet sein, die es erlauben, die vorstehenden Elemente an verschiedenen Positionen zu fixieren. Es sind aber auch noch andere dem Fachmann bekannte Lösungen zur Verstellung oder zum Anbringen von verschiedenartigen vorstehenden Elementen denkbar.

In einer weiteren bevorzugten Ausführungsform weist der erste Endbereich des Setzwerkzeugs zumindest eine Zentrierspitze auf, um den Reißschweißdom bezüglich des ersten Endbereichs und/oder des Materials zu zentrieren. Da das Reibschweißen durch eine Drehbewegung des Reibschweißdoms in dem Material durchgeführt wird, ist eine möglichst genaue Zentrierung des Reibschweißdoms notwendig, um ein bestmögliches Schweißergebnis zu erhalten. Sollte beispielsweise durch eine nicht genaue Zentrierung des Reibschweißdoms eine Unwucht entstehen, so kann dies dazu führen, dass nicht alle Seiten des Reibschweißdoms gleich gut mit dem Material verschweißt werden. Die zumindest eine Zentrierspitze ist vorzugsweise derart ausgestaltet, dass sie an der dem Material zugewandten Seite des Reibschweißdoms aus dem Material heraus schaut und somit bei dem Setzen des Reibschweißdoms vor dem Reibschweißdom auf das Material trifft und dort eine Zentrieröffnung bildet. Die zumindest eine Zentrierspitze kann beispielsweise auch zusätzlich Mittel aufweisen, die den Reibschweißdom halten, wenn der Reibschweißdom am Setzwerkzeug angeordnet ist.

In einer weiteren bevorzugten Ausführungsform weist das Setzwerkzeug weiter eine Kupplung auf, wobei die Kupplung ausgestaltet ist, um die Drehbewegung des Antriebsstrangs von der Drehbewegung des Haltemittels zu entkoppeln. Dies kann beispielsweise von Vorteil sein, wenn die Drehbewegung des Antriebsstrangs bereits gestoppt werden kann, weil der Reibschweißdom die richtige Tiefe im Material erreicht hat, aber zum gründlichen Entfernen des sich gebildeten Wulstes noch einige Umdrehungen des Haltemittels mit dem Schneidmittel notwendig sind. Die Kupplung kann dabei beispielsweise ein Nachdrehen des Haltemittels bewirken, auch wenn die Drehbewegung des Antriebsstrangs bereits beendet ist, oder die Kupplung kann den Antriebsstrang von dem Antrieb entkoppeln, so dass nur noch das Haltemittel vom Antrieb gedreht wird nicht aber der Antriebsstrang.

In einer weiteren Ausführungsform bestehen das Haltemittel und/oder der erste Endbereich des Setzwerkzeugs aus Metall. Dies hat beispielsweise den Vorteil, dass wenn Aufsätze, wie zum Beispiel der Fräsaufsatz - aber auch andere Aufsätze - am Setzwerkzeug befestigt werden sollen, diese Verbindung magnetisch hergestellt werden kann oder zumindest magnetisch unterstützt werden kann. Durch eine derartige magnetische Verbindung lässt sich der Aufsatz nur durch eine gewisse Kraftaufwendung wieder vom Haltemittel und/oder dem ersten Endbereich des Setzwerkzeugs lösen. Alternativ oder zusätzlich können das Haltemittel und/oder der erste Endbereich des Setzwerkzeugs auch zumindest ein magnetisches Element aufweisen, das dann mit einem Aufsatz eine magnetische Verbindung herstellen kann. Allerdings sind auch andere Verbindung zwischen dem Setzwerkzeug und Aufsätzen denkbar, beispielsweise können Klickverbindungen verwendet werden.

In einer weiteren bevorzugten Ausführungsform kann das zumindest eine Schneidmittel des Fräsaufsatzes auch eine Wendeschneidplatte sein, die je nach Material der zu entfernenden Deckschicht gewechselt werden kann. Das zumindest eine Schneidmittel kann mindestens eine vorzugsweise gehärtete Schneidkante aufweisen, die durchgehend oder unterbrochen sein kann. Der Fräsaufsatz mit dem zumindest einen Schneidmittel kann einstückig hergestellt sein. Zum Abfräsen eines definierten Bereichs der Deckschicht kann sich das zumindest eine Schneidmittel im Wesentlichen über die Hälfte der gesamten Breite der Stirnfläche des zweiten Endbereichs des Fräsaufsatzes erstrecken.

In einer weiteren bevorzugten Ausführungsform weist der erste Endbereich des Fräsaufsatzes ein magnetisches Element auf, um magnetisch mit dem Setzwerkzeug verbunden zu werden, so dass sich der Fräsaufsatz nur durch eine gewisse Kraftaufwendung wieder vom Setzwerkzeug lösen lässt.

In einer bevorzugten Ausführungsform ist der Fräsaufsatz aus Metall hergestellt. Dies gibt dem Fräsaufsatz nicht nur eine gewisse Stabilität, sondern ermöglicht auch, dass der Fräsaufsatz magnetisch am Setzwerkzeug befestigt werden kann, wenn das Setzwerkzeug ein magnetisches Element aufweist. Alternativ weist der Fräsaufsatz am ersten Endbereich ein Metall auf, das von einem magnetischen Element des Setzwerkzeugs kontaktiert werden kann.

Weitere Einzelheiten, Merkmale und Vorteile der Gegenstände der Erfindung ergeben sich aus den Unteransprüchen, sowie aus der nachfolgenden Beschreibung der zugehörigen Zeichnungen, in denen - beispielhaft - eine bevorzugte Ausführungsform der Erfindung dargestellt ist. Es zeigen:
- Fig. 1: eine Ansicht einer beispielhaften Ausführungsform des erfindungsgemäßen Setzwerkzeugs;
- Fig. 2: eine Ansicht einer beispielhaften Ausführungsform des erfindungsgemäßen Setzwerkzeugs und des Fräsaufsatzes;
- Fig. 3: eine Ansicht einer beispielhaften Ausführungsform des Setzwerkzeugs und des Fräsaufsatzes des erfindungsgemäßen Setzwerkzeugsystems beim Entfernen eines definierten Bereichs einer Deckschicht eines Sandwichmaterials;
- Fig. 4: eine Schnittansicht einer beispielhaften Ausführungsform des erfindungsgemäßen Setzwerkzeugs mit Reibschweißdom vor dem Setzten des Reibschweißdoms; und
- Fig. 5: eine Ansicht einer beispielhaften Ausführungsform des erfindungsgemäßen Setzwerkzeugs mit Reibschweißdom beim Setzen des Reibschweißdoms in ein Sandwichmaterial.

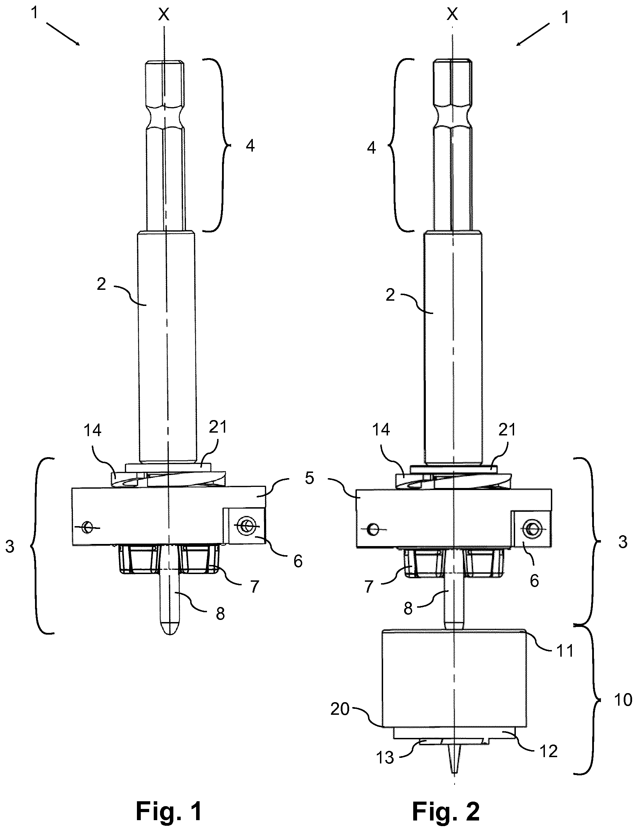

Figur 1 zeigt eine beispielhafte Ausführungsform des erfindungsgemäßen Setzwerkzeugs 1. Das Setzwerkzeug 1 weist einen Antriebsstrang 2 auf. Der Antriebsstrang 2 weist einen ersten Endbereich 3, sowie einen zweiten Endbereich 4 auf. Die beiden Endbereiche befinden sich an gegenüberliegenden Enden des Antriebsstrangs. In der in Figur 1 gezeigten Ausführungsform des erfindungsgemäßen Setzwerkzeugs 1, hat der zweite Endbereich 4 eine sechseckige Form, ähnlich zu bekannten Bitwerkzeugen und kann mittels dieser Form eine lösbare Kraftkopplung zum Antrieb herstellen. Es sind aber auch andere Verbindungen zwischen dem zweiten Endbereich 4 und dem Antrieb denkbar. Beispielsweise kann aber der zweite Endbereich 4 auch einen runden Querschnitt aufweisen, so dass eine Aufnahme in einem bekannten Bohrfutter möglich ist. Dabei können die Verbindungen lösbar aber auch nicht lösbar sein. Beispielsweise kann auch eine nicht lösbare Verbindung zwischen dem zweiten Endbereich 4 und dem Antrieb bestehen. Das Setzwerkzeug 1 kann auch selbst ein Teil des Antriebs sein.

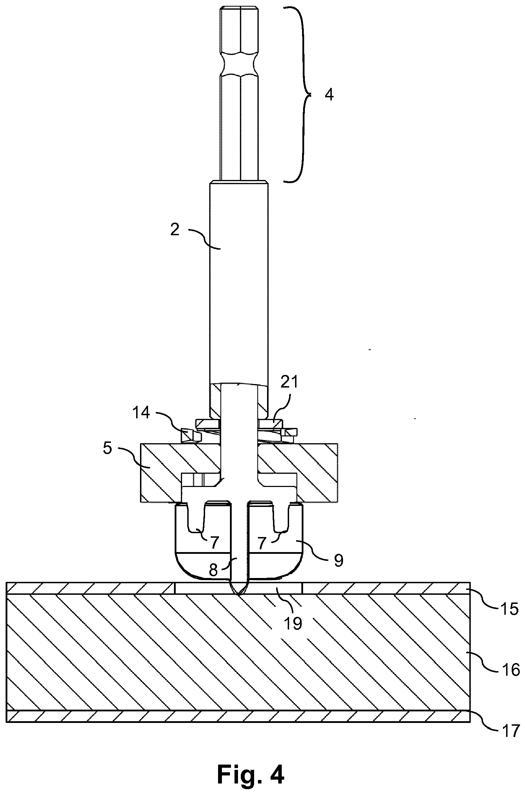

Der erste Endbereich 3 des Antriebsstrangs 2 des Setzwerkzeugs 1 weist in der in Figur 1 gezeigten Ausführungsform ein ringförmiges Haltemittel 5 auf. Dabei erstreckt sich der Antriebsstrang 2 des Setzwerkzeugs 1 durch eine mittige Öffnung des ringförmigen Haltemittels 5 und der erste Endbereich 3 geht in eine Zentrierspitze 8 über. Um die Zentrierspitze 8 herum sind in der in Figur 1 gezeigten Ausführungsform vorstehende Elemente 7 gezeigt, die in entsprechende Ausnehmung in dem Reibschweißdom 9 (siehe Figur 4) angeordnet werden können, um eine lösbare Kraftkopplung herzustellen. Auch die Zentrierspitze 8 des Antriebsstrangs 2 kann in eine zentrische Ausnehmung des Reibschweißdoms 9 (siehe Figur 4) greifen, so dass dieser an dem Setzwerkzeug 1 zentriert werden kann. Des Weiteren sorgt die Zentrierspitze 8 dafür, dass der Reibschweißdom 9 (siehe Figur 4) gerade ins Material gesetzt werden kann, so dass keine Unwucht entsteht und alle Seiten des Reibschweißdoms (siehe Figur 4) mit dem Material verschweißt werden. Die Ausgestaltung der vorstehenden Elemente 7 ist beliebig und nur bedingt durch das von dem Setzwerkzeug 1 auf den Reibschweißdom 9 (siehe Figur 4) zu übertragende Drehmoment. Gleiches gilt auch für die Anzahl der vorstehenden Elemente 7. Um das Setzwerkzeug 1 für eine große Anzahl von verschiedenen Reibschweißdomen 9 (siehe Figur 4) verwendbar zu machen, die beispielsweise eine andere Anordnung oder Geometrie ihrer Ausnehmungen haben, können die vorstehenden Elemente 7 auch komplett austauchbar sein, oder ihr Abstand zueinander kann variiert werden. Es ist auch denkbar, dass die vorstehenden Elemente 7 auch noch zusätzlich Mittel aufweisen, mit der die vorstehenden Elemente 7 nicht nur in Ausnehmungen in dem Reibschweißdom 9 (siehe Figur 4) greifen können, sondern dass sie auch noch eine weitere lösbare Kraftkopplung herstellen, um das Drehmoment besser auf den Reibschweißdom 9 (siehe Figur 4) zu übertragen, ohne dass dabei die Gefahr besteht, dass die vorstehenden Elemente 7 aus den Ausnehmungen rutschen. Beispielsweise können Klickverbindungen oder Unter- oder Überschneidungen von Elementen gewählt werden, um das Drehmoment besser zu übertragen. Des Weiteren können diese weiteren Mittel auch dazu dienen, den Reibschweißdom 9 (siehe Figur 4) am Setzwerkzeug 1 zu halten, bevor der Reibschweißdom 9 (siehe Figur 4) das Material, in das der Reibschweißdom 9 (siehe Figur 4) gesetzt werden soll, kontaktiert.

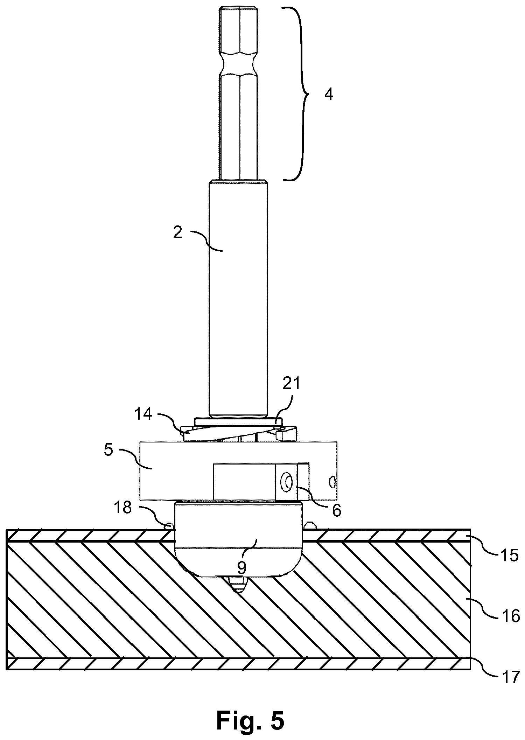

In der in Figur 1 gezeigten Ausführungsform ist das ringförmige Haltemittel 5 am ersten Endbereich 3 des Antriebsstrangs 2 angeordnet. Dieses ist mittels der Feder 14 am Antriebsstrang 2 federnd gelagert. Die Feder 14 ist dabei zwischen einem Anschlag 21 am Antriebsstrang 2 und dem Haltemittel 5 angeordnet. Die federnde Lagerung des Haltemittels 5 hilft beim Abschaben beziehungsweise Entfernen eines Wulstes. Wenn das am Haltemittel 5 angeordnete Schneidmittel 6 Kontakt mit dem beim Setzen des Reibschweißdoms 9 (siehe Figur 4) entstehenden Wulstes 18 (siehe Figur 5) hat, kann das Schneidmittel 6 den entstehenden Wulst 18 (siehe Figur 5) abschaben. Sobald der Widerstand aber größer wird, also das Schneidmittel 6 nicht nur den Wulst 18 (siehe Figur 5) kontaktiert, sondern auch die Oberfläche des Materials in der der Reibschweißdom 9 (siehe Figur 4) gesetzt werden soll, so kann das Haltemittel 5 zurückfedern, um nicht auch Material der Oberfläche des Materials zu entfernen. Allerdings sind auch andere federnde Lagerungen des Haltemittels 5 denkbar. Beispielsweise kann das Haltemittel 5 auch mittels einer adaptiven Feder gelagert sein, so dass sich die Rückstellkraft der Feder an das Material anpassen lässt. Beispielsweise kann für härtere Materialien eine höhere Rückstellkraft bereitgestellt werden und für weichere Materialien eine geringere Rückstellkraft. Des Weiteren kann die Feder 14 beispielsweise auch austauschbar sein, so dass die Feder 14 gewechselt werden kann, wenn Reibschweißdome 9 in unterschiedliche Materialien gesetzt werden sollen. Des Weiteren kann auch der Anschlag 21 am Antriebsstrang 2 variabel beziehungsweise einstellbar sein, so dass auch hierdurch die von der Feder 14 auf das Haltemittel 5 ausgeübte Kraft variiert werden kann.

Das Schneidmittel 6 ist in der in Figur 1 gezeigten Ausführungsform als Wendeschneidplatte ausgelegt. Dabei ist die Schneide der Wendeschneidplatte im Wesentlichen senkrecht zur Drehachse X des Setzwerkzeugs 1 ausgerichtet, so dass die Schneide den entstehenden Wulst 18 (siehe Figur 5) abschaben beziehungsweise entfernen kann. Es sind aber auch andere Schneidmittel denkbar, die dazu geeignet sind, den beim Setzen des Reibschweißdoms 9 (siehe Figur 4) entstehenden/entstandenen Wulst 18 (siehe Figur 5) zu entfernen. Auch die Anzahl der Schneidmittel 6 ist nicht auf das eine Schneidmittel 6, wie in Figur 1 gezeigt, begrenzt. Es können eine beliebige Anzahl von Schneidmitteln 6 verwendet werden. Dabei kann auch die Position der Schneidmittel 6, beispielsweise für unterschiedliche Größen von Reibschweißdomen 9 (siehe Figur 4) variabel und einstellbar sein. Ein Schneidmittel 6 kann beispielsweise variabel in seiner Position an dem Haltemittel 5 sein, so dass das Schneidmittel 6 verschoben werden kann, beispielsweise entlang eines vordefinierten Pfades. Damit können mit nur einem Setzwerkzeug 1 verschiedenartige Reibschweißdome 9 (siehe Figur 4) gesetzt werden, ohne dass jedes Mal ein neues Setzwerkzeug 1 verwendet werden müsste. Des Weiteren ist auch denkbar, dass die Schneide des Schneidmittels 6, welche sich in der in Figur 1 gezeigten Ausführungsform von den vorstehenden Elementen 7 bis zum Rand des Haltemittels 5 erstreckt, sich nur auf einer bestimmten Länge erstreckt, nämlich auf einer Länge, die notwendig ist, um den beim Setzen des Reibschweißdoms 9 (siehe Figur 4) entstehenden Wulst 18 (siehe Figur 5) abzuschaben.

Figur 2 zeigt eine Ansicht einer beispielhaften Ausführungsform des Setzwerkzeugs 1, wie es in Figur 1 gezeigt ist zusammen mit einer beispielhaften Ausführungsform des Fräsaufsatzes 10. Der Fräsaufsatz 10 weist einen ersten Endbereich 11 auf, der ausgestaltet ist, um mit dem Setzwerkzeug 1 eine lösbare Kraftkopplung herzustellen. Dabei können beispielsweise die vorstehenden Elemente 7 des Setzwerkzeugs 1 in Ausnehmungen - hier nicht gezeigt - des Fräsaufsatzes 10 greifen, so dass das Drehmoment von dem Setzwerkzeug 1 auf den Fräsaufsatz 10 übertragen werden kann. Es sind aber auch andere beliebige Kopplungen zwischen Fräsaufsatz 10 und Setzwerkzeug 1 denkbar. Damit das Fräswerkzeug 10 besser am Setzwerkzeug 1 hält, können beispielsweise das Setzwerkzeug 1 und/oder der Fräsaufsatz 10 magnetische Elemente aufweisen, die derart ausgewählt sind, dass sie sich Anziehen. Dabei können diese magnetischen Elemente passiv oder aktiv sein. Es kann aber auch entweder nur das Setzwerkzeug 1 ein magnetisches Element aufweisen und der Fräsaufsatz 10 kann aus Metall sein oder eben das Setzwerkzeug 1 ist aus Metall und der Fräsaufsatz 10 weist ein magnetisches Element auf. Eine derartige magnetische Verbindung kann von Vorteil sein, wenn nicht schon die vorstehenden Elemente 7 des Setzwerkzeugs 1 derart ausgestaltet sind, dass diese den Fräsaufsatz 10 am Setzwerkzeug 1 halten können.

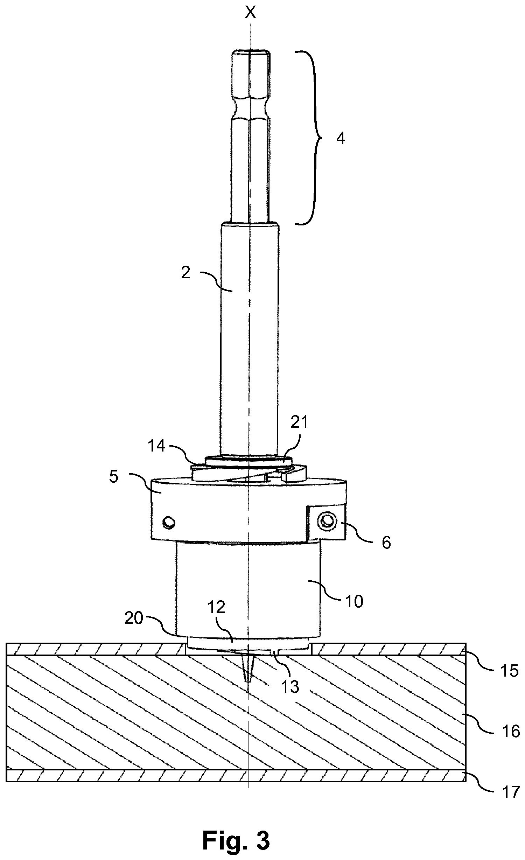

Der zweite Endbereich 12 des Fräsaufsatzes 10 ist derart ausgestaltet, dass er die Deckschicht 15 (siehe Figur 3) eines Materials in das der Reibschweißdom 9 (siehe Figur 4) gesetzt werden soll entfernen kann. Dazu weist der zweite Endbereich 12 des Fräsaufsatzes 10 zumindest ein Schneidmittel 13 auf. Dieses zumindest eine Schneidmittel 13 kann beispielsweise am Umfang eines definierten Bereichs entlang schneiden, so dass später der durch den Schnitt definierte Bereich entfernt beziehungsweise abgenommen werden kann. Alternativ kann das Schneidmittel 13 derart ausgestaltet sein, dass es direkt einen definierten Bereich einer Deckschicht 15 (siehe Figur 3) eines Materials entfernt, beispielsweise abfräst oder abschabt. Dazu weist der Fräsaufsatz 10 vorzugsweise ein Schneidmittel 13 auf, welches sich im Wesentlichen über die Hälfte der gesamten Breite der Stirnfläche des zweiten Endbereichs 12 des Fräsaufsatzes 10 erstreckt. Es sind aber beliebige Ausgestaltungen des Schneidmittels 13 denkbar, die dazu geeignet sind, einen definierten Bereich einer Deckschicht 15 (siehe Figur 3) eines Materials zu entfernen. Der zweite Endbereich 12 des Fräsaufsatzes 10 kann auch einen Anschlag 20 aufweisen, der verhindert, dass der Fräsaufsatz 10 tiefer als bis zu diesem Anschlag 20 in das Material eintaucht. Auch kann der Fräsaufsatz 10 am zweiten Endbereich 12 eine Zentrierspitze aufweisen, die es dem Fräsaufsatz 10 ermöglicht, zentriert in das Material einzudringen.

Figur 3 zeigt eine Ansicht einer beispielhaften Ausführungsform des erfindungsgemäßen Setzwerkzeugsystems mit Setzwerkzeug 1 und Fräsaufsatz 10 beim Entfernen eines definierten Bereichs einer Deckschicht 15 eines Sandwichmaterials. In dem hier gezeigten Beispiel besteht das Material aus einer oberen Deckschicht 15, einem inneren Material 16 und einer unteren Deckschicht 17. In der gezeigten Ausführungsform ist der Fräsaufsatz 10 am Setzwerkzeug 1 angeordnet, so dass die Drehbewegung des Setzwerkzeugs 1 auf den Fräsaufsatz 10 übertragen werden kann. Durch die Drehbewegung des Fräsaufsatzes 10 wird mit Hilfe des Schneidmittels 13, welches sich am zweiten Endbereich 12 des Fräsaufsatzes 10 befindet, die Deckschicht 15 in einem definierten Bereich entfernt. Das Schneidmittel 13 des Fräsaufsatzes 10 hat dazu eine geeignete Schneidkante, die eine ausreichende Härte aufweist, um die Deckschicht 15 zu entfernen. Beispielsweise kann das Schneidmittel 13 auch austauchbar sein, um an verschiedene Deckschichten 15 angepasst zu werden. Dazu kann das Schneidmittel 13 beispielsweise mittels einer Klickverbindung am zweiten Endbereich 12 des Fräsaufsatzes 10 befestigt sein. Alternativ kann das Schneidmittel 13 auch mit Hilfe einer Schraubverbindung am zweiten Endbereich 12 des Fräsaufsatzes 10 befestigt sein. Grundsätzlich kann der komplette zweite Endbereich 12 des Fräsaufsatzes 10 austauschbar sein, so dass er an verschiedene Größen von Reibschweißdomen 9 (siehe Figur 4) angepasst werden kann.

Figur 4 zeigt eine Schnittansicht einer beispielhaften Ausführungsform des Setzwerkzeugs 1 des erfindungsgemäßen Setzwerkzeugsystems mit einem am ersten Endbereich 3 angeordneten Reibschweißdom 9 vor dem Setzten des Reibschweißdoms 9 in ein Sandwichmaterial. Auch in diesem Beispiel besteht das Material aus einer oberen Deckschicht 15, einem inneren Material 16 und einer unteren Deckschicht 17. In der in Figur 4 gezeigten Ausführungsform erstreckt sich die Zentrierspitze 8 des ersten Endbereichs 3 des Setzwerkzeugs 1 durch den Reibschweißdom 9, um diesen zu zentrieren. Die Zentrierspitze 8 kann beispielsweise in eine Öffnung geführt werden, die eine Zentrierspitze des Fräsaufsatzes gebildet hat. Des Weiteren erstrecken sich in den Reibschweißdom 9 die vorstehenden Elemente 7 des ersten Endbereichs 3 des Setzwerkzeugs 1. Mit den vorstehenden Elementen 7 wird eine lösbare Kraftkopplung zwischen dem Setzwerkzeug 1 und dem Reibschweißdom 9 erzeugt, so dass das auf den Antriebsstrang 2 vom Antrieb übertragene Drehmoment auf den Reibschweißdom 9 übertragen werden kann, um den Reibschweißdom 9 in das Sandwichmaterial zu setzen. Dabei ist in dem in Figur 4 gezeigten Sandwichmaterial bereits ein definierter Bereich 19 der Deckschicht 15 durch einen ersten Arbeitsschritt mit dem in Figur 3 gezeigten Fräsaufsatz 10 entfernt worden.

Figur 5 zeigt eine Ansicht einer beispielhaften Ausführungsform des erfindungsgemäßen Setzwerkzeugs 1 mit am ersten Endbereich 3 angeordneten Reibschweißdom 9 beim Setzten des Reibschweißdoms 9 in ein Sandwichmaterial. Dabei hat sich beim Setzen des Reibschweißdoms 9 bereits eine Wulst 18 am Übergang zwischen dem Reibschweißdom 9 und dem Material gebildet. Beim weiteren Vortrieb des Reibschweißdoms 9 in das Material, kommt das Haltemittel 5 und dementsprechend auch das Schneidmittel 6 dem Wulst 18 näher, bis das Schneidmittel 6 letztendlich den Wulst 18 kontaktiert und abschaben kann. Wenn der Reibschweißdom 9 oberflächenbündig gesetzt ist, so hat das Schneidmittel 6 den Wulst 18 vollständig entfernt und kein weiteres Nachbearbeiten der Deckschicht 15 ist notwendig. Es kann beim Setzen notwendig sein, dass nach dem Vortrieb des Setzwerkzeugs 1 noch ein Nachlauf des Haltemittels 5 notwendig ist, um den Wulst 18 vollständig zu entfernen. Um dieses zu ermöglichen, kann zwischen dem Haltemittel 5 und dem Antriebsstrang 2 eine Kupplung (hier nicht gezeigt) angeordnet sein, die die Drehbewegung des Haltemittels 5 von der Drehbewegung des Antriebsstrangs 2 trennt und ein Nachlaufen des Haltemittels 5 ermöglicht.

## Patentansprüche

1. Ein Setzwerkzeug (1) zum Setzen eines Reibschweißdoms (9), wobei das Setzwerkzeug (1) aufweist:
einen Antriebsstrang (2) mit
einem ersten Endbereich (3), wobei der erste Endbereich (3) ausgestaltet ist, um eine lösbare Kraftkopplung mit dem Reibschweißdom (9) oder einem Fräsaufsatz (10) herzustellen, und
einem zweiten Endbereich (4), wobei der zweite Endbereich (4) ausgestaltet ist, um eine Kraftkopplung mit einem Antrieb herzustellen
**dadurch gekennzeichnet, dass**
ein Haltemittel (5) federnd an dem ersten Endbereich (3) des Antriebsstrangs (2) angeordnet ist und an dem Haltemittel (5) zumindest ein Schneidmittel (6) angeordnet ist, wobei das zumindest eine Schneidmittel (6) im Wesentlichen senkrecht zur Drehachse (X) des Antriebsstrangs (2) ausgerichtet ist.

2. Das Setzwerkzeug (1) nach Anspruch 1, wobei das zumindest eine Schneidmittel (6) eine Wendeschneidplatte ist.

3. Das Setzwerkzeug (1) nach einem der vorhergehenden Ansprüche, wobei der erste Endbereich (3) zumindest ein vorstehendes Element (7) aufweist, um die lösbare Kraftkopplung mit dem Reibschweißdom (9) herzustellen.

4. Das Setzwerkzeug (1) nach einem der vorhergehenden Ansprüche, wobei der erste Endbereich (3) zumindest eine Zentrierspitze (8) aufweist.

5. Das Setzwerkzeug (1) nach einem der vorhergehenden Ansprüche, wobei das Setzwerkzeug (1) weiter eine Kupplung aufweist, wobei die Kupplung ausgestaltet ist, um die Drehbewegung des Antriebsstrangs (2) von der Drehbewegung des Haltemittels (5) zu entkoppeln.

6. Das Setzwerkzeug (1) nach einem der vorhergehenden Ansprüche, wobei das Haltemittel (5) und/oder der erste Endbereich (3) aus Metall ist.

7. Das Setzwerkzeug (1) nach einem der vorhergehenden Ansprüche, wobei das Haltemittel (5) und/oder der erste Endbereich (3) ein magnetisches Element aufweist.

8. Ein Setzwerkzeugsystem, aufweisend
zumindest ein Setzwerkzeug (1) nach einem der Ansprüche 1 bis 7; und
zumindest einen Fräsaufsatz (10) aufweisend:
einen ersten Endbereich (11), wobei der erste Endbereich (11) ausgestaltet ist, um eine lösbare Kraftkopplung mit einem ersten Endbereich (3) des Setzwerkzeugs (1) herzustellen; und
einen zweiten Endbereich (12), wobei der zweite Endbereich (12) zumindest ein Schneidmittel (13) aufweist;
wobei der Fräsaufsatz (10) an dem ersten Endbereich (3) des Setzwerkzeugs (1) lösbar angeordnet ist.

9. Das Setzwerkzeugsystem nach Anspruch 8, wobei der Fräsaufsatz (10) ausgestaltet ist, um magnetisch an dem ersten Endbereich (3) des Setzwerkzeugs (1) lösbar angeordnet zu werden.

10. Das Setzwerkzeugsystem nach einem der Ansprüche 8 oder 9, wobei sich das zumindest eine Schneidmittel (13) des Fräsaufsatzes (10) im Wesentlichen über die Hälfte der gesamten Breite der Stirnfläche des zweiten Endbereichs (12) des Fräsaufsatzes (10) erstreckt.

11. Das Setzwerkzeugsystem nach einem der Ansprüche 8 bis 10, wobei das zumindest eine Schneidmittel (13) des Fräsaufsatzes (10) mindestens eine Wendeschneidplatte ist.

12. Das Setzwerkzeugsystem nach einem der Ansprüche 8 bis 11, wobei der Fräsaufsatz (10) aus Metall ist.

13. Das Setzwerkzeugsystem nach einem der Ansprüche 8 bis 12, wobei der Fräsaufsatz (10) und das zumindest eine Schneidmittel (13) des Fräsaufsatzes (10) einstückig ausgestaltet sind.

## Claims

1. A setting tool (1) for setting a friction welding boss (9), wherein the setting tool comprises:
a drive shaft (2) with
a first end portion (3), wherein the first end portion (3) is configured to establish a detachable force coupling with the friction welding boss (9) or a milling adapter (10), and
a second end portion (4), wherein the second end portion (4) is configured to establish a force coupling with a drive
**characterized in that**
a holder (5) is resiliently arranged at the first end portion (3) of the drive shaft (2) and at least one cutting means (6) is arranged at the holder (5), wherein the at least one cutting means (6) is aligned essentially perpendicular to the rotation axis (X) of the drive shaft (2).

2. The setting tool (1) according to claim 1, wherein the at least one cutting means (6) is a indexable insert.

3. The setting tool (1) according to any of the preceding claims, wherein the first end portion (3) comprises at least one protruding element (7) for establishing the detachable force coupling with the friction welding boss (9).

4. The setting tool (1) according to any of the preceding claims, wherein the first end portion (3) comprises at least one centering tip (8).

5. The setting tool (1) according to any of the preceding claims, wherein the setting tool (1) comprises a coupling, wherein the coupling is configured to decouple the rotary motion of the drive shaft (2) from the rotary motion of the holder (5).

6. The setting tool (1) according to any of the preceding claims, wherein the holder (5) and/or the first end portion (3) is made from metal.

7. The setting tool (1) according to any of the preceding claims, wherein the holder (5) and/or the first end portion (3) comprises a magnetic element.

8. A setting tool system, comprising
at least one setting tool (1) according to any of the claims 1 to 7; and
at least one milling adapter (10), comprising:
a first end portion (11), wherein the first end portion (11) is formed to establish a detachable force coupling with a first end portion (3) of the setting tool (1); and
a second end portion (12), wherein the second end portion (12) comprises at least one cutting means (13);
wherein the milling adapter (10) is detachably arranged at the first end portion (3) of the setting tool (1).

9. The setting tool system according to claim 8, wherein the milling adapter (10) is configured to be magnetically and detachably arranged at the first end portion (3) of the setting tool (1).

10. The setting tool system according to any of claims 8 or 9, wherein the at least one cutting means (13) of the milling adapter (10) extends about substantially more than half of the entire width of the end plane of the second end portion (12) of the milling adapter (10).

11. The setting tool system according to any of claims 8 to 10, wherein the at least one cutting means (13) of the milling adapter (10) is at least one indexable insert.

12. The setting tool system according to any of claims 8 to 11, wherein the milling adapter (10) is made from metal.

13. The setting tool system according to any of claims 8 to 12, wherein the milling adapter (10) and the at least one cutting means (13) of the milling adapter (10) are made as one piece.

## Revendications

1. Outil de pose (1) pour la pose d'un dôme de soudage par friction (9),
dans lequel l'outil de pose (1) présente :
une chaîne cinématique (2) avec
une première zone d'extrémité (3), dans lequel la première zone d'extrémité (3) est configurée pour établir un couplage par force amovible avec le dôme de soudage par friction (9) ou une fraise (10), et
une deuxième zone d'extrémité (4), dans lequel la deuxième zone d'extrémité (4) est configurée pour établir un couplage par force avec un entraînement
**caractérisé en ce que**
un moyen de retenue (5) est agencé de manière élastique au niveau de la première zone d'extrémité (3) de la chaîne cinématique (2) et au moins un moyen de coupe (6) est agencé au niveau du moyen de retenue (5), dans lequel l'au moins un moyen de coupe (6) est orienté de manière sensiblement perpendiculaire à l'axe de rotation (X) de la chaîne cinématique (2).

2. Outil de pose (1) selon la revendication 1, dans lequel l'au moins un moyen de coupe (6) est une plaque de coupe réversible.

3. Outil de pose (1) selon l'une quelconque des revendications précédentes, dans lequel la première zone d'extrémité (3) présente au moins un élément en saillie (7) pour établir le couplage par force amovible avec le dôme de soudage par friction (9).

4. Outil de pose (1) selon l'une quelconque des revendications précédentes, dans lequel la première zone d'extrémité (3) présente au moins une pointe de centrage (8).

5. Outil de pose (1) selon l'une quelconque des revendications précédentes, dans lequel l'outil de pose (1) présente en outre un couplage, dans lequel le couplage et configuré pour découpler le mouvement de rotation de la chaîne cinématique (2) du mouvement de rotation du moyen de retenue (5).

6. Outil de pose (1) selon l'une quelconque des revendications précédentes, dans lequel le moyen de retenue (5) et/ou la première zone d'extrémité (3) est en métal.

7. Outil de pose (1) selon l'une quelconque des revendications précédentes, dans lequel le moyen de retenue (5) et/ou la première zone d'extrémité (3) présente un élément magnétique.

8. Système d'outil de pose, présentant
au moins un outil de pose (1) selon l'une quelconque des revendications 1 à 7 ; et
au moins une fraise (10) présentant :
une première zone d'extrémité (11), dans lequel la première zone d'extrémité (11) est configurée pour établir un couplage par force amovible avec la première zone d'extrémité (3) de l'outil de pose (1) ; et
une deuxième zone d'extrémité (12), dans lequel la deuxième zone d'extrémité (12) présente au moins un moyen de coupe (13) ;
dans lequel la fraise (10) est agencée de manière amovible à la première zone d'extrémité (3) de l'outil de pose (1).

9. Système d'outil de pose selon la revendication 8, dans lequel la fraise (10) est configurée pour être agencée de manière amovible de façon magnétique au niveau de la première zone d'extrémité (3) de l'outil de coupe (1).

10. Système d'outil de pose selon l'une quelconque des revendications 8 ou 9, dans lequel l'au moins un moyen de coupe (13) de la fraise (10) s'étend sensiblement sur la moitié de toute la largeur de la surface frontale de la deuxième zone d'extrémité (12) de la fraise (10).

11. Système d'outil de pose selon l'une quelconque des revendications 8 à 10, dans lequel l'au moins un moyen de coupe (13) de la fraise (10) est au moins une plaque de coupe réversible.

12. Système d'outil de pose selon l'une quelconque des revendications 8 à 11, dans lequel la fraise (10) est en métal.

13. Système d'outil de pose selon l'une quelconque des revendications 8 à 12, dans lequel la fraise (10) et l'au moins un moyen de coupe (13) de la fraise (10) sont configurés d'un seul tenant.
